# EUROPÄISCHE PATENTSCHRIFT

(11) **EP 3 209 888 B1**
(45) Veröffentlichungstag und Bekanntmachung des Hinweises auf die Patenterteilung: **12.12.2018**
(21) Anmeldenummer: 15766846.8
(22) Anmeldetag: 22.09.2015
(51) Int. Cl.: F16B 5/02, F16B 21/04

(54) **SCHNELLBEFESTIGER, VERFAHREN ZUR VERBINDUNG VON ZWEI BAUTEILEN MITTELS DES SCHNELLBEFESTIGERS UND HERSTELLUNGSVERFAHREN DAFÜR**
QUICK FASTENER, METHOD FOR CONNECTING TWO COMPONENTS BY MEANS OF THE QUICK FASTENER AND PRODUCTION METHOD THEREFOR
DISPOSITIF DE FIXATION RAPIDE, PROCÉDÉ D'ASSEMBLAGE DE DEUX ÉLÉMENTS AU MOYEN DU DISPOSITIF DE FIXATION RAPIDE, ET PROCÉDÉ DE FABRICATION AFFÉRENT

(30) Priorität: 20.10.2014 DE 102014221266
(43) Veröffentlichungstag der Anmeldung: 30.08.2017
(73) Patentinhaber: Böllhoff Verbindungstechnik GmbH, 33649 Bielefeld (DE); Volkswagen Aktiengesellschaft, 38440 Wolfsburg (DE)
(72) Erfinder: JODELEIT, Martin, 33617 Bielefeld (DE); DEMBOWSKY, Hans-Joachim, 21035 Hamburg (DE); MATTHES, Jörg, 32051 Herford (DE); JANSSEN, André, 38550 Isenbüttel (DE); HÜBNER, Torsten, 38444 Wolfsburg (DE)
(74) Vertreter: HWP Intellectual Property
(86) Internationale Anmeldenummer: PCT/EP2015/071787
(87) Internationale Veröffentlichungsnummer: WO 2016/062488

(56) Entgegenhaltungen:
- DE-A1-102011 104 386

## Beschreibung

### 1. Gebiet der Erfindung

Die vorliegende Erfindung betrifft einen Schnellbefestiger, mit dem zumindest ein erstes und ein zweites Bauteil miteinander verbindbar sind. Des Weiteren betrifft vorliegende Erfindung ein Verbindungsverfahren für die oben genannten Bauteile mithilfe des Schnellbefestigers sowie ein Herstellungsverfahren für den Schnellbefestiger.

### 2. Hintergrund der Erfindung

Im Stand der Technik sind verschiedene Verbinder bekannt, mit denen ein erstes und ein zweites Bauteil miteinander verbindbar sind. Während diese Verbinder das erste und zweite Bauteil fest miteinander verbinden, sorgen sie gleichzeitig häufig für einen axialen Toleranzausgleich zwischen den beiden Bauteilen oder für einen axialen und einen lateralen Toleranzausgleich zwischen beiden Bauteilen. Ein derartiger Verbinder ist bspw. in US 5,492,388 und DE 20 2007 016 945 U1 offenbart.

Des Weiteren offenbart der Stand der Technik Schnellbefestiger, mit denen ebenfalls mindestens ein erstes und ein zweites Bauteil miteinander verbindbar sind. Zu diesem Zweck besteht der Schnellbefestiger aus einem ersten Element, das am ersten Bauteil befestigt wird, bspw. eine Kupplung, und aus einem zweiten Element, bspw. ein Kugelkopf, das an dem zweiten Bauteil befestigt wird. Steckt man das erste und das zweite Element zusammen, entsteht eine Rastverbindung zwischen dem ersten und dem zweiten Element. Gleichzeitig stellt diese Rastverbindung eine Verbindung zwischen dem ersten und dem zweiten Bauteil her. Ein derartiger Schnellbefestiger ist in DE 10 2009 016 755 A1 beschrieben.

DE 10 2011 104 386 A1 beschreibt einen Drehverschluss zum Befestigen von Anbauteilen. Hier werden mithilfe einer Drehbewegung die einzelnen Komponenten des Drehverschlusses miteinander verbunden. Die Komponenten des Drehverschlusses sind wiederum mit jeweils einem Bauteil verbunden, sodass gleichzeitig eine Verbindung zwischen zwei Bauteilen hergestellt wird. Der Halt der Drehverbindung wird über selbsthemmende oder selbstschneidende Gewinde realisiert, wobei der Reibschluss der Gewinde durch die Federvorspannung einer Wellenfeder unterstützt wird. Diese Kräfte sind aber nicht ausreichend, um bspw. den Schwingungen in Kraftfahrzeugen zu widerstehen. Daher kommt es häufig zu einem Versagen der hergestellten Verbindung, was zeitintensive Wartungsarbeiten nach sich zieht.

Es ist daher die Aufgabe vorliegender Erfindung, einen im Vergleich zum Stand der Technik verlässlichen Schnellbefestiger bereitzustellen, mit dem zumindest ein erstes und ein zweites Bauteil miteinander verbindbar sind.

### 3. Zusammenfassung der Erfindung

Die obige Aufgabe wird durch einen Schnellbefestiger gemäß dem unabhängigen Patentanspruch 1 oder 2, durch ein Verbindungsverfahren gemäß dem unabhängigen Patentanspruch 8 sowie durch ein Herstellungsverfahren gemäß dem unabhängigen Patentanspruch 11 gelöst. Beispielhafte Ausgestaltungen vorliegender Erfindung gehen aus der folgenden Beschreibung, den begleitenden Zeichnungen und den anhängenden Patentansprüchen hervor.

Der erfindungsgemäße Schnellbefestiger, mit dem zumindest ein erstes und ein zweites Bauteil miteinander verbindbar sind, weist die folgenden Merkmale auf: einen Befestigungsbolzen mit einem radial äußeren Befestigungsgewinde einer ersten Gangrichtung, der an dem zweiten Bauteil befestigbar ist, ein komprimierbares Vorspannelement, das an dem ersten Bauteil befestigbar ist und an einer radialen Innenseite ein Vorspanngewinde mit einer zweiten der ersten entgegengesetzten Gangrichtung umfasst, ein hohlzylinderförmiges Gewindeelement mit einem Antriebsmittel, das mit einem Außengewinde an einer radialen Außenseite in das Vorspanngewinde des Vorspannelements einschraubbar ist und der an einer radialen Innenseite ein Innengewinde umfasst, in das das Befestigungsgewinde des Befestigungsbolzens einschraubbar ist, wobei zwischen hohlzylinderförmigem Gewindeelement und dem komprimierbaren Vorspannelement mindestens eine konstruktive Verdrehsicherung vorgesehen ist. Zudem umfasst vorliegende Erfindung den oben beschriebenen Schnellbefestiger, bei dem der Befestigungsbolzen bereits mit dem zweiten Bauteil verbunden ist.

Das erste und das zweite Bauteil werden dadurch miteinander verbunden, dass der Befestigungsbolzen in Kombination mit einer axial wirkenden mechanischen Vorspannung mit dem komprimierbaren Vorspannelement verschraubt wird. Zu diesem Zweck weist das komprimierbare Vorspannelement ein hohlzylinderförmiges Gewindeelement auf, in das der Befestigungsbolzen einschraubbar ist. Eine Drehung des hohlzylinderförmigen Gewindeelements um einen definierten Drehwinkel im Vergleich zum komprimierbaren Vorspannelement sorgt für eine verlässliche Verbindung zwischen dem ersten und dem zweiten Bauteil. Um diese Verbindung dauerhaft und verlässlich aufrechtzuerhalten, ist eine konstruktive Verdrehsicherung zwischen dem hohlzylinderförmigen Gewindeelement und dem komprimierbaren Vorspannelement vorgesehen. Es ist des Weiteren bevorzugt, eine derartige oder zusätzliche Verdrehsicherung zwischen dem Gewindeelement und dem Vorspannelement als Rückdrehsicherung während des Befestigungsverfahrens für das erste Bauteil am zweiten Bauteil zu verwenden. Gemäß einer weiteren Ausführungsform vorliegender Erfindung ist eine Verdrehsicherung zwischen dem Gewindeelement und dem Vorspannelement vorgesehen, die ein Verkontern bzw. ein zu festes Eindrehen des Gewindeelements in das Vorspannelement verhindert. In diesem Zusammenhang bedeutet der Begriff konstruktive Verdrehsicherung, dass an den sich relativ zueinander bewegenden Komponenten hohlzylinderförmiger Gewindeelement und komprimierbares Vorspannelement geometrische Ausgestaltungen vorgesehen sind, deren Zusammenwirken eine Verdrehsicherung bereitstellen. Daraus folgt, dass hier nicht eine Verdrehsicherung allein basierend auf einem Reibungszustand in einem selbsthemmenden oder selbstschneidenden Gewinde gemeint ist.

Gemäß einer bevorzugten Ausführungsform vorliegender Erfindung weist der Schnellbefestiger eine lösbare Verrastung zwischen dem Vorspannelement und dem hohlzylinderförmigen Gewindeelement auf, mit der ein Befestigungszustand zwischen dem ersten und zweiten Bauteil sicherbar ist. Daraus folgt, dass diese konstruktive Verdrehsicherung den finalen Verbindungszustand zwischen dem ersten und zweiten Bauteil aufrechterhält. Zu diesem Zweck weist vorzugsweise das Vorspannelement eine radial außen angeordnete Vertiefung auf, in der ein axial verlaufender Rastarm des hohlzylinderförmigen Gewindeelements einrastbar ist. Einerseits stellt diese Verrastung sicher, dass die hergestellte Verbindung sich nicht durch Vibrationen und andere äußere Einflüsse löst. Zudem stellt vorzugsweise die vorgesehene Verrastung ebenfalls sicher, dass der Schnellbefestiger während der Herstellung der Verbindung zwischen dem ersten und zweiten Bauteil nicht überdreht wird. Denn die Verrastung, liefert gleichzeitig eine Verdrehsicherung in drehender Befestigungsrichtung des hohlzylinderförmigen Gewindeelements. Auf diese Weise ist gewährleistet, dass die miteinander zu verbindenden Bauteile nicht mechanisch überbeansprucht werden.

Gemäß einer weiteren bevorzugten Ausführungsform vorliegender Erfindung weist das Vorspannelement eine radial außen angeordnete Erhöhung auf, mit der eine lösbare Reibschlussverbindung zwischen dem axial verlaufenden Rastarm des hohlzylinderförmigen Gewindeelements herstellbar ist. Der axial verlaufende Rastarm des hohlzylinderförmigen Gewindeelements ist vorzugsweise radial benachbart zur Außenseite des Vorspannelements angeordnet. Während der Rotation des zylinderförmigen Gewindeelements bewegt sich der Rastarm gegenüber der radialen äußeren Oberfläche des Vorspannelements. Mithilfe einer radialen Erhebung an der radialen Außenseite des Vorspannelements wird dem Rastarm ein Hindernis in den Weg gestellt, das während der Drehbewegung nur durch ein erhöhtes Drehmoment überwindbar ist. Sollte nach Überwinden der radial außen angeordneten Erhöhung das Gewindeelement bspw. vom Werker oder von einem Werkzeug freigegeben werden, sorgt der Reibschluss zwischen Rastarm und Erhöhung für eine Reibschlussverbindung, die ein Zurückdrehen des hohlzylinderförmigen Gewindeelements entgegen der Installationsdrehrichtung verhindert. Daraus folgt, dass diese Art der konstruktiven Verdrehsicherung eine Zwischen-Rückdrehsicherung im Hinblick auf die relative Drehposition zwischen hohlzylinderförmigem Gewindeelement und Vorspannelement darstellt.

Gemäß einer weiteren bevorzugten Ausführungsform vorliegender Erfindung weist das Vorspannelement stirnseitig angrenzend an das hohlzylindrische Gewindeelement eine lösbare Rastverbindung auf, mit der in einer Drehrichtung eine Relativdrehung zwischen Vorspannelement und Gewindeelement blockiert ist und mit der in einer entgegengesetzten Drehrichtung eine Relativdrehung zwischen Vorspannelement und Gewindeelement behindert ist.

Erfindungsgemäß bevorzugt weist der Schnellbestiger ebenfalls eine konstruktive Verdrehsicherung auf, um ein Verkontern des hohlzylindrischen Gewindeelements mit dem Vorspannelement zu vermeiden. Ein derartiges Verkontern würde dazu führen, dass man das hohlzylindrische Gewindeelement nicht mehr aus dem Vorspannelement lösen kann, sodass auch keine Verbindung zwischen dem ersten und dem zweiten Bauteil herstellbar wäre. Eine derartige Verdrehsicherung ist mithilfe des axial verlaufenden Rastarms (siehe oben) und einer entsprechenden Aufnahme bzw. Verrastungsnut am radialen Außenrand des Vorspannelements in einer Anfangs- oder Transportposition des Schnellbefestigers herstellbar. Ebenfalls erfindungsgemäß bevorzugt ist eine verdeckte konstruktive Verdrehsicherung vorgesehen. Zu diesem Zweck ist eine Rastverbindung zwischen den einander gegenüberliegenden Stirnseiten von Vorspannelement und Gewindeelement angeordnet. Diese lösbare Rastverbindung bzw. konstruktive Verdrehsicherung wird vorzugsweise durch die Kombination eines Vorsprungs oder einer Rippe mit einer Verrastungsnut gebildet, die entsprechend an den einander gegenüberliegenden Stirnseiten angeordnet sind. In Abhängigkeit von der Formgebung des Vorsprungs ist die Verrastung entgegen der Installationsdrehrichtung des Schnellbefestigers nicht lösbar, während sie in Installationsdrehrichtung lösbar ist. Auf diese Weise wird ein zu festes bzw. nicht mehr lösbares Eindrehen des hohlzylinderförmigen Gewindeelements in das Vorspannelement verhindert.

Gemäß einer weiteren bevorzugten Ausführungsform vorliegender Erfindung weist das Gewindeelement eine Sicherungsscheibe als Verliersicherung auf.

Vorliegende Erfindung offenbart zudem ein Verbindungsverfahren für mindestens ein erstes und ein zweites Bauteil mithilfe eines Schnellbefestigers, insbesondere ein Schnellbefestiger, wie er oben beschrieben worden ist. Das erfindungsgemäße Verbindungsverfahren weist die folgenden Schritte auf: Bereitstellen des zweiten Bauteils mit einem Befestigungsbolzen mit einem radial äußeren Befestigungsgewinde einer ersten Gangrichtung, Bereitstellen des ersten Bauteils mit einer Durchgangsöffnung und Befestigen eines komprimierbaren Vorspannelements an dem ersten Bauteil, wobei das Vorspannelement an einer radialen Innenseite ein Vorspanngewinde mit einer zweiten der ersten entgegengesetzten Gangrichtung umfasst, Einschrauben des Befestigungsbolzens in ein hohlzylinderförmiges Gewindeelement, wobei der hohlzylinderförmige Gewindeelement über ein Antriebsmittel drehend das zweite Bauteil am ersten Bauteil befestigt und das hohlzylindrische Gewindeelement über eine Verdrehsicherung am Vorspannelement verrastet.

Erfindungsgemäß bevorzugt ist das Verbindungsverfahren durch den Einsatz einer konstruktiven Verdrehsicherung zwischen dem Vorspannelement und dem hohlzylindrischen Gewindeelement gekennzeichnet. Nachdem eine Verbindung zwischen dem ersten und dem zweiten Bauteil mithilfe des Schnellbefestigers hergestellt worden ist, garantiert die konstruktive Verdrehsicherung den Erhalt und die Beständigkeit der hergestellten Verbindung. Zu diesem Zweck wird eine konstruktive Verrastung zwischen dem Vorspannelement und dem hohlzylindrischen Gewindeelement genutzt, die die erzielte Befestigungseinstellung des Schnellbefestigers aufrechterhält.

Erfindungsgemäß bevorzugt rastet zu diesem Zweck ein axial verlaufender Rastarm des hohlzylindrischen Gewindeelements in einer radial außen angeordneten Vertiefung des Vorspannelements ein. Es ist ebenfalls bevorzugt, den axial verlaufenden Rastarm des hohlzylindrischen Gewindeelements über eine radial außen angeordnete Erhöhung des Vorspannelements zu bewegen, sodass der Rastarm und die Erhöhung eine Rückdrehsicherung für das Gewindeelement bereitstellt. Diese Rückdrehsicherung verhindert ein Rückdrehen des Gewindeelements entgegen der Installationsdrehrichtung des hohlzylinderförmigen Gewindeelements.

Vorliegende Erfindung umfasst zudem ein Herstellungsverfahren für den oben beschriebenen Schnellbefestiger das die folgenden Schritte aufweist: Bereitstellen eines komprimierbaren Vorspannelements, das an dem ersten Bauteil befestigbar ist und an einer radialen Innenseite ein Vorspanngewinde mit einer zweiten der ersten entgegengesetzten Gangrichtung umfasst, Herstellen eines hohlzylinderförmigen Gewindeelements mit einem Antriebsmittel, das mit einem Außengewinde an einer radialen Außenseite in das Vorspanngewinde des Vorspannelements einschraubbar ist und das an einer radialen Innenseite ein Innengewinde umfasst, in das das Befestigungsgewinde des Befestigungsbolzens einschraubbar ist, Verbinden des komprimierbaren Vorspannelements mit dem hohlzylinderförmigen Gewindeelement und vorsehen einer konstruktiven Verdrehsicherung zwischen dem hohlzylinderförmigen Gewindeelement und dem komprimierbaren Vorspannelement.

Weiterhin bevorzugt wird in einem weiteren Schritt das Vorspannelement mit einer radial außen angeordneten Vertiefung und der hohlzylinderförmiger Gewindeelement mit einem axial verlaufenden Rastarm bereitgestellt, so dass diese verrastbar sind. Gemäß einer weiteren bevorzugten Ausgestaltung wird das Vorspannelement mit einer radial außen angeordneten Erhöhung bereitgestellt, mit der eine lösbare Reibschlussverbindung zwischen einem axial verlaufenden Rastarm des hohlzylinderförmigen Gewindeelements herstellbar ist. Es ist zudem bevorzugt, eine lösbare Rastverbindung am Vorspannelement stirnseitig angrenzend an das hohlzylindrische Gewindeelement vorzusehen, mit der in einer Drehrichtung eine Relativdrehung zwischen Vorspannelement und Gewindeelement blockiert ist und mit der in einer entgegengesetzten Drehrichtung eine Relativdrehung zwischen Vorspannelement und Gewindeelement behindert ist

### 4. Kurze Beschreibung der begleitenden Zeichnungen

Die vorliegende Erfindung wird unter Bezugnahme auf die begleitenden Zeichnungen näher erläutert. Diese zeigen:
- Figur 1: eine erste bevorzugte Ausführungsform des erfindungsgemäßen Schnellbefestigers,
- Figur 2: eine Explosionsdarstellung der Ausführungsform des Schnellbefestigers gemäß Figur 1,
- Figur 3: eine bevorzugte schematische Darstellung des ersten Bauteils,
- Figur 4: eine Schnittansicht einer bevorzugten Ausführungsform des erfindungsgemäßen Schnellbefestigers in einer vorinstallierten Position im ersten Bauteil,
- Figur 5: eine Schnittansicht einer bevorzugten Ausführungsform des Schnellbefestigers gemäß Figur 4 in einem Verbindungszustand,
- Figur 6: eine Draufsicht auf eine bevorzugte Ausführungsform des hohlzylinderförmigen Gewindeelements,
- Figur 7: eine axiale Ansicht einer bevorzugten Ausführungsform des erfindungsgemäßen Schnellbefestigers von unten,
- Figur 8: eine perspektivische Ansicht einer bevorzugten Ausführungsform des erfindungsgemäßen Schnellbefestigers in einem Transportzustand,
- Figur 9: eine perspektivische Ansicht einer bevorzugten Ausführungsform eines Teils des Vorspannelements,
- Figur 10: eine perspektivische Ansicht einer bevorzugten Ausführungsform des hohlzylinderförmigen Gewindeelements,
- Figur 11: ein Flussdiagramm einer bevorzugten Ausführungsform des erfindungsgemäßen Verbindungsverfahrens.

### 5. Detaillierte Beschreibung der bevorzugten Ausführungsformen

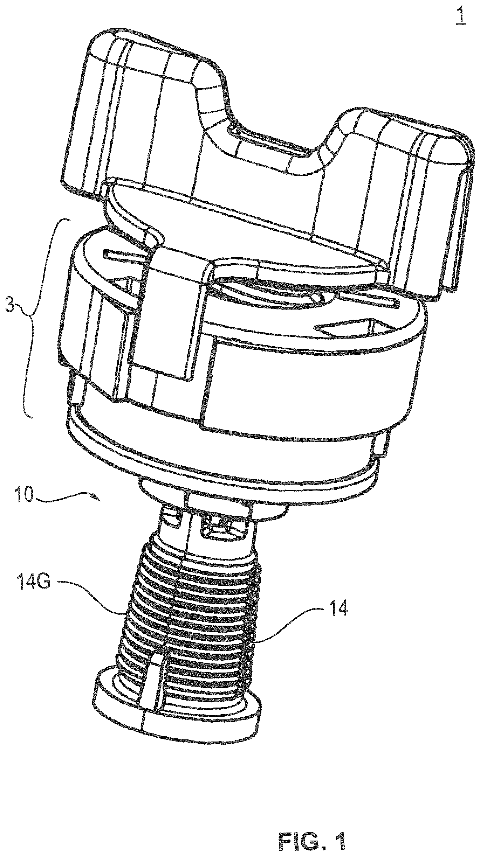

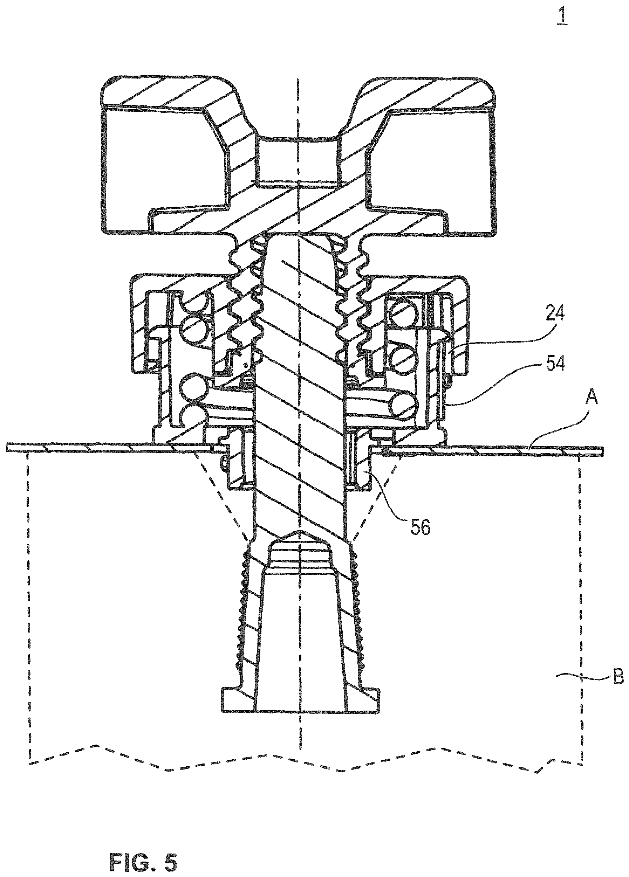

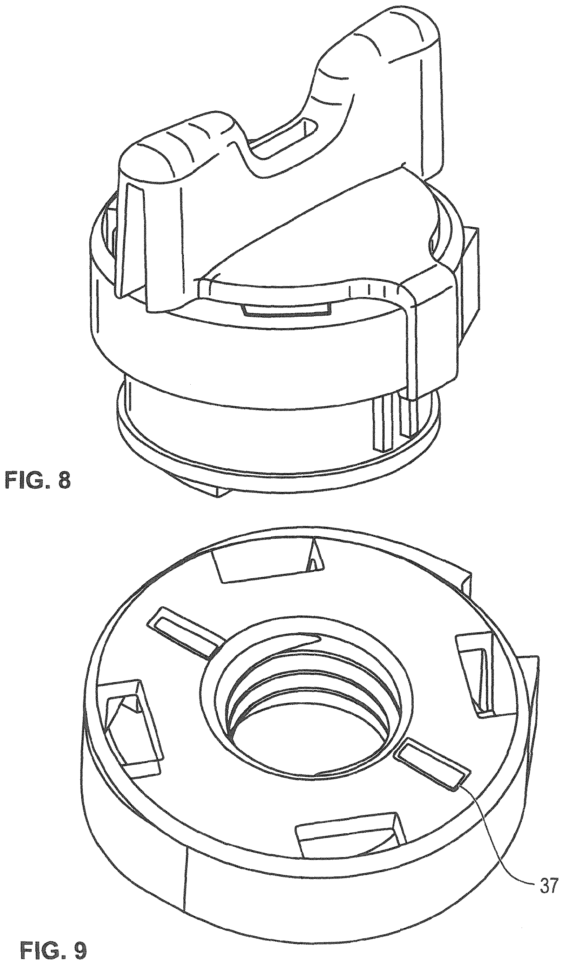

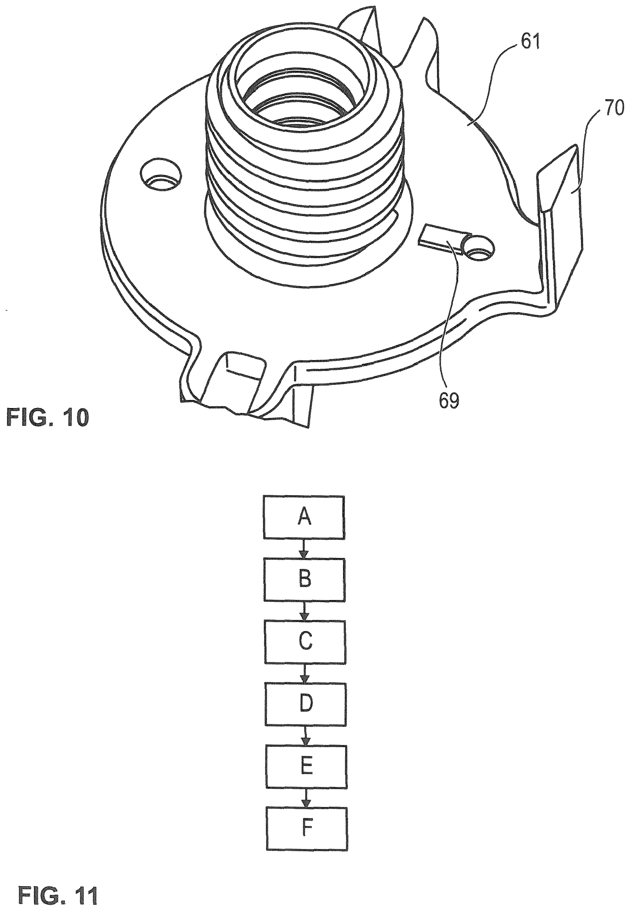

Der erfindungsgemäße Schnellbefestiger 1 dient der Befestigung von zumindest einem ersten Bauteil A und einem zweiten Bauteil B aneinander, wie es bspw. in Fig. 5 gezeigt ist. Verschiedene bevorzugte Ausführungsformen des erfindungsgemäßen Schnellbefestigers 1 sind in den Figuren 1-10 dargestellt. Es versteht sich, dass die einzelnen Merkmale des Schnellbefestigers 1 in der jeweils gezeigten und beschriebenen Merkmalskombination aber auch losgelöst von dieser Merkmalskombination im Schnellbefestiger 1 einsetzbar sind. Zudem sind ohne weiteres Merkmale der einen bevorzugten Ausführungsform auch in Kombination mit einer anderen bevorzugten Ausführungsform der Erfindung einsetzbar.

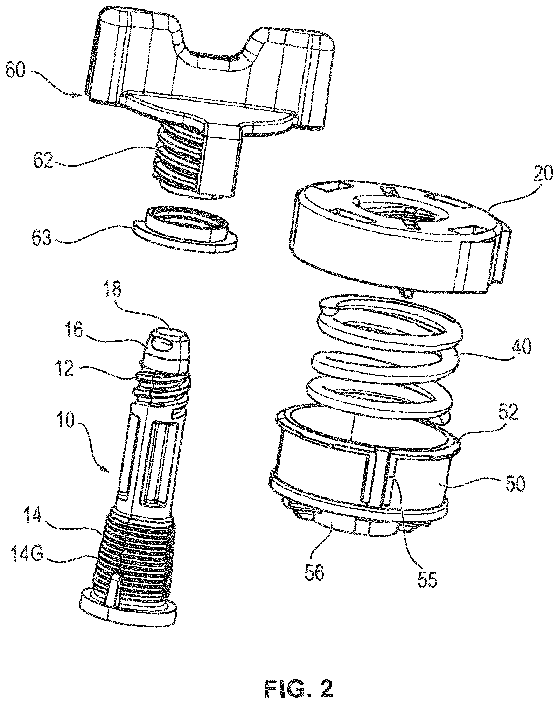

Figur 1 zeigt eine erste bevorzugte Ausführungsform des Schnellbefestigers 1, der in Figur 2 in einer Explosionsdarstellung gezeigt ist. Der Schnellbefestiger 1 besteht aus einem Befestigungsbolzen 10 mit einem Befestigungsgewinde 12 einer ersten Gangrichtung. Das Befestigungsgewinde 12 dient der Verbindung zu weiteren Komponenten des Schnellbefestigers 1 (siehe unten). Des Weiteren umfasst der Befestigungsbolzen 10 ein Verbindungsende 14. Das Verbindungsende 14 weist gemäß einer bevorzugten Ausführungsform vorliegender Erfindung ein Gewinde auf, mit dem der Befestigungsbolzen 10 am Bauteil B befestigbar ist bzw. befestigt wird (Schritt A). In gleicher Weise ist es ebenfalls bevorzugt, das Verbindungsende 14 des Befestigungsbolzens als ein Bajonettverschluss, einen Schnappverschluss oder als ein Klebeende zur klebenden Verbindung mit dem Bauteil B auszubilden. Gemäß Fig. 2 umfasst das Verbindungsende 14 einen gerippten, in Richtung des Befestigungsgewindes konisch zulaufenden Befestigungsabschnitt. Dieses Verbindungsende 14 wird in einer Öffnung des Bauteils B durch einen Presssitz befestigt. Sollte sich der Befestigungsbolzen 10 drehen, wird dadurch die Verbindung zum Bauteil B nicht beeinträchtigt. Der Befestigungsbolzen 10 umfasst zudem bevorzugt ein Führungsende 16 mit einer Anschlagfläche 18. Das Führungsende 16 wird mit dem Befestigungsgewinde 12 in die Kombination aus einem komprimierbaren Vorspannelement 3 und einem hohlzylinderförmigen Gewindeelement 60 eingeschraubt (Schritt C). Vorzugsweise wird das Befestigungsgewinde 12 in ein Innengewinde 64 des hohlzylinderförmigen Gewindeelements 60 eingeschraubt (siehe unten).

Das komprimierbare Vorspannelement 3 umfasst gemäß einer bevorzugten Ausführungsform vorliegender Erfindung eine zentral angeordnete Feder 40, an der sich axial gegenüberliegend ein Führungselement 50 und ein Sicherungselement 20 abstützen. Gemäß unterschiedlicher bevorzugter Ausführungsformen vorliegender Erfindung besteht die Feder 40 aus einer Schraubenfeder (siehe Fig. 2), aus einer Mehrzahl von Tellerfedern (nicht gezeigt) oder aus einer anderen in axialer Richtung komprimierbaren Federkonstruktion mit axialer Durchgangsöffnung.

Um die Funktion des komprimierbaren Vorspannelements 3 bestehend aus den oben genannten Komponenten 20, 40, 50 zu gewährleisten, weist die Feder 40 vorzugsweise eine Federkonstante K₄₀ im Bereich von 20 N/mm ≤ K₄₀ ≤ 50 N/mm, bevorzugt 30 N/mm ≤ K₄₀ ≤ 40 N/mm und weiter bevorzugt von 34 N/mm ≤ K₄₀ ≤ 38 N/mm auf. Gemäß einer ersten bevorzugten Ausführungsform weist die Schraubenfeder eine Federkonstante K₄₀ von 40 N/mm auf. Es ist ebenfalls bevorzugt, die Schraubenfeder 40 mit einer Federkonstante K₄₀ von 37,5 N/mm vorzusehen. Die Feder 40 wird in einem komprimierten Zustand zwischen dem Sicherungselement 20 und dem Führungselement 50 gehalten. Das Sicherungselement 20 und das Führungselement 50 sind untrennbar, aber relativ zueinander bewegbar miteinander verbunden. Zu diesem Zweck bilden einander gegenüberliegende, radial einwärts ragende und umlaufende Vorsprünge 22, 52 jeweils einen für den angrenzenden Vorsprung 52, 22 unüberwindbaren Hinterschnitt. Weiterhin bevorzugt ist ein radial einwärts ragender Steg in einer axial verlaufenden Linearführung, vorzugsweise eine Nut oder Vertiefung, angeordnet. Während der Steg am Sicherungselement 22 und die Linearführung am Führungselement 50 angeordnet sind, ist es ebenfalls bevorzugt, den Steg am Führungselement 50 und die Linearführung am Sicherungselement 20 anzuordnen. Wird das komprimierbare Vorspannelement 3 gegen die Kraft der Feder 40 in axialer Richtung zusammengedrückt, dann bewegen sich das Sicherungselement 20 und das Führungselement 50 aufeinander zu. Bei Entlastung des komprimierbaren Vorspannelements 3 entfernen sich das Sicherungselement 20 und das Führungselement 50 aufgrund der Kraft der Feder 40 voneinander, bis die Vorsprünge 22 und 52 eine weitere Bewegung blockieren. Dabei wird die Feder 40 zumindest teilweise entlastet.

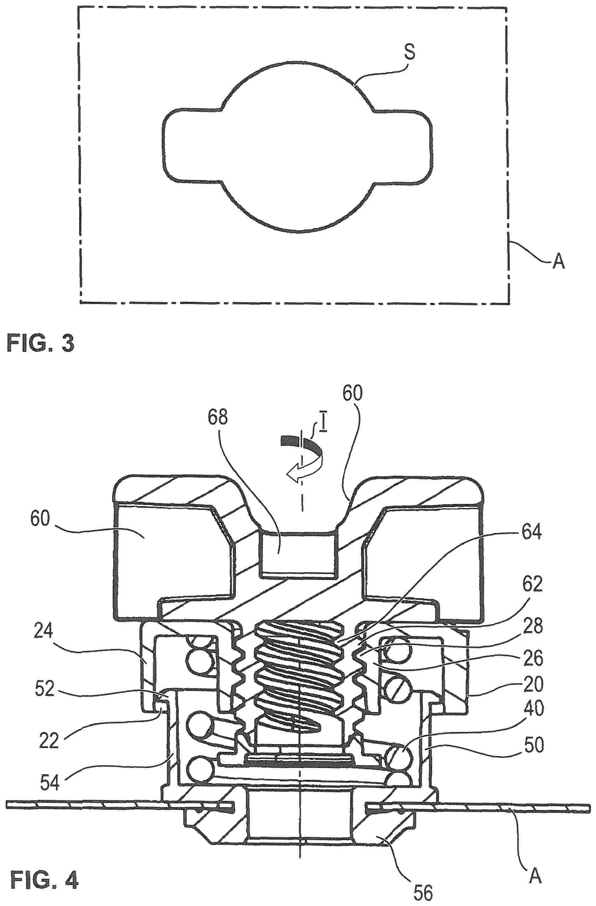

Das Führungselement 50 umfasst einen Anschluss 56, mit dessen Hilfe das Führungselement 50 mit dem ersten Bauteil A verbindbar ist (Schritt B). Gemäß einer bevorzugten Ausführungsform ist der Anschluss 56 ein Bajonettverschluss mit zumindest einem, vorzugsweise zwei radial auswärts ragenden Stegen, der in einem Schlüsselloch S des ersten Bauteils A befestigbar ist (siehe Fig. 3). Es ist ebenfalls bevorzugt, den Anschluss 56 als Gewindeanschluss oder Rastverbindung auszubilden.

Das Führungselement 50 und das Sicherungselement 20 bilden einen Hohlraum, in dem die Feder 40 angeordnet ist. Die radial äußere Begrenzung des Vorspannelements 3 wird durch sich axial erstreckende umlaufende Wände 24, 54 des Sicherungselements 20 und des Führungselements 50 gebildet. Während das Sicherungselement 20 und das Führungselement 50 eine zentrale axiale Durchgangsöffnung aufweisen, wird die Durchgangsöffnung des Sicherungselements 20 durch eine axial einwärts in das Sicherungselement 20 ragenden Flansch 26 gebildet.

Der Flansch 26 umfasst an seiner radialen Innenseite ein Gewinde 28 mit einer zweiten Gangrichtung. Die zweite Gangrichtung des Gewindes 28 ist der ersten Gangrichtung des Befestigungsgewindes 12 des Befestigungsbolzens 10 entgegengesetzt. Das Gewinde 28 ist vorzugsweise als Standardgewinde ausgeführt, wobei ebenfalls hemmende Gewinde einsetzbar sind.

Ein hohlzylindrisches Gewindeelement 60 ist innerhalb des Flansches angeordnet. Das Gewindeelement 60 umfasst ein radial außen angeordnetes Außengewinde 62 und ein an einer radialen Innenseite angeordnetes Innengewinde 64. Das Befestigungsgewinde 12 des Befestigungsbolzens 10 wird in das Innengewinde 64 des hohlzylindrischen Gewindeelements 60 eingeschraubt. Dazu weist das Innengewinde 64 die gleiche Gangrichtung wie das Befestigungsgewinde 12 auf.

Das Außengewinde 62 des hohlzylindrischen Gewindeelements 60 wirkt mit dem Gewinde 28 an der radialen Innenseite des Flansches 26 des Sicherungselements 20 zusammen. Daher weist das Außengewinde 62 die entgegengesetzte Gangrichtung im Vergleich zum Innengewinde 64 auf. Um ein Herausdrehen des Außengewindes 62 aus dem Gewinde 28 zu verhindern, weist das hohlzylindrische Gewindeelement 60 eine Sicherungsscheibe 63 auf. Die Sicherungsscheibe 63 ist vorzugsweise mittels Ultraschallschweißen am Ende des Gewindes 62 befestigt und erstreckt sich radial über das Gewinde 62 hinaus.

Nachdem der Befestigungsbolzen 10 mit dem Bauteil B und das komprimierbare Vorspannelement 3 über den Anschluss 56 am Bauteil A befestigt worden sind, werden der Befestigungsbolzen 10 und das komprimierbare Vorspannelement 3 mithilfe des hohlzylinderförmigen Gewindeelements 60 miteinander verbunden. Zunächst befindet sich der Schnellbefestiger 1 ohne Befestigungsbolzen 10 in einer Ausgangsposition, wie es beispielgebend in Fig. 4 gezeigt ist. Gemäß einer ersten bevorzugten Verfahrensalternative wird das Befestigungsgewinde 12 in das Innengewinde 64 eingeschraubt. Vorzugsweise ist das Innengewinde 64 in einem Sackloch angeordnet. Daher wird gemäß einer Ausführungsform des vorliegenden Verbindungsverfahrens der Befestigungsbolzen 10 soweit in das hohlzylinderförmige Gewindeelement 60 eingeschraubt, dass die Anschlagfläche 18 am Boden des Sacklochs anliegt. Nachfolgend wird das Gewindeelement 60 über ein Antriebsmittel 66, hier vorzugsweise eine Flügelanordnung, in Installationsrichtung I gedreht. Da die Installationsrichtung I der Gangrichtung des Gewindes 28 und des Außengewindes 62 entgegengesetzt ist, schraubt sich bei Drehung des hohlzylinderförmigen Gewindeelements 60 in Installationsrichtung I das Gewindeelement 60 aus dem Flansch 26 des Sicherungselements 20 heraus.

Da das hohlzylinderförmige Gewindeelement 60 in seiner axialen Position fest oder nur geringfügig von dem Bauteil A weg versetzbar ist, versetzt das Drehen des hohlzylinderförmigen Gewindeelements 60 in Installationsrichtung I das Sicherungselement 20 in Richtung des Bauteils A (vgl. Fig. 4 und 5). Dadurch bewegt sich das Sicherungselement 20 in axialer Richtung auf das Führungselement 50 zu, wodurch die Feder 40 komprimiert wird. Die komprimierte Feder 40 (siehe Fig. 5) erzeugt eine Anpresskraft und somit eine Reibungskraft zwischen den Gewindeflanken von Befestigungsgewinde 12 und Innengewinde 64 sowie von Außengewinde 62 und dem Gewinde 28. Da die erzeugte Anpresskraft höher ist als die Anpresskraft bspw. einer Wellenfeder, wird ein ungewolltes Verdrehen zwischen dem hohlzylinderförmigen Gewindeelement 60 und dem Sicherungselement 20 und/oder dem Befestigungsbolzen 10 vermieden.

Gemäß einer weiteren bevorzugten Verfahrensalternative in einer Ausgangsposition des Schnellbefestigers 1 gemäß Fig. 4 wird der Befestigungsbolzen 10 in die zentrale Öffnung des Führungselements 50 gesteckt. In dieser Position grenzen das Befestigungsgewinde 12 und das Innengewinde 64 aneinander an und sind in Eingriffsbereitschaft. Sobald der Befestigungsbolzen 10 und das hohlzylinderförmige Gewindeelement 60 relativ zueinander in Gangrichtung von Befestigungsgewinde 12 und Innengewinde 64 gedreht werden, wird der Befestigungsbolzen 10 in das Innengewinde 64 eingeschraubt und das hohlzylinderförmige Gewindeelement 60 aus dem Gewinde 28 des Flansches 26 des Sicherungselements 20 herausgeschraubt. Auf diese Weise bewegen sich das Bauteil A und B aufeinander zu, um befestigt zu werden. Des Weiteren wird durch die Drehung des hohlzylinderförmigen Gewindeelements 60 die Feder 40 zwischen Sicherungselement 20 und Führungselement 50 komprimiert. Die dadurch entstehende Federspannung überträgt sich auf die Bauteile A, B, sodass diese gegeneinander vorgespannt sind. Die im Vergleich zu bspw. einer Wellenfeder aufgebrachte höhere Federvorspannung, vorzugsweise mit der oben genannten Federkonstante der Feder 4 0, erzeugt höhere Anpresskräfte zwischen den Gewindeflanken und daher eine höhere Haftreibung in diesen Bereichen. Diese Haftreibung wirkt einem Lösen des Schnellbefestigers 1 durch Drehung entgegen.

Vorzugsweise weisen das Befestigungsgewinde 12, das Innengewinde 64, das Gewinde 28 und das Außengewinde 62 eine Gewindesteigung von 2,5-4,5 mm pro Umdrehung, vorzugsweise 3-4 mm und weiter bevorzugt von 3,5 mm pro Umdrehung, auf. Mithilfe dieser Gewindesteigung ist gewährleistet, dass der Werker manuell oder maschinell das hohlzylinderförmige Gewindeelement 60 nur um einen Drehwinkel γ im Bereich von 90° ≤ γ < 720°, bevorzugt 90° ≤ γ ≤ 360° und weiter bevorzugt 90° ≤ γ ≤ 320°, drehen muss, um die Bauteile A, B aneinander zu befestigen.

Um mithilfe des Schnellbefestigers 1 die beiden Bauteile A, B zu verbinden, wird das hohlzylinderförmige Gewindeelement 60 über das Antriebsmittel 66, 68 gedreht. Bevorzugt umfasst der hohlzylinderförmige Gewindeelement 60 ein manuell betätigbares Antriebsmittel 66, vorzugsweise in Form einer Flügelkonstruktion (siehe Fig. 4, 5, 6, 8). Die einander gegenüberliegend und in radialer Richtung orientierten Flügel 66 erstrecken sich vorzugsweise radial über den äußeren Rand des Sicherungselements 20 hinaus. Aufgrund dieser Längserstreckung wird ein ausreichend langer Hebelarm durch die Flügel 66 bereitgestellt, um das hohlzylinderförmige Gewindeelement 60 leichter drehen zu können.

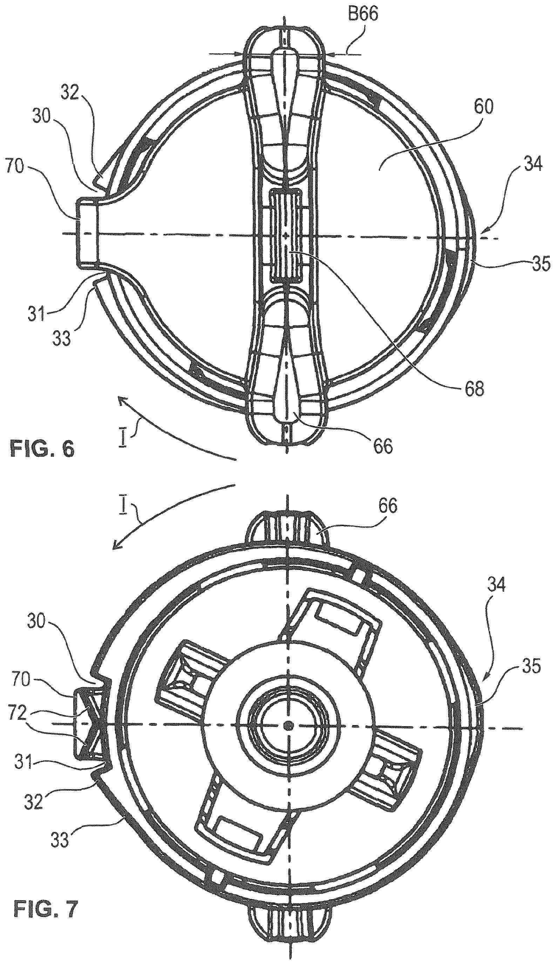

Gemäß einer weiteren bevorzugten Ausführungsform des manuellen Antriebsmittels 66 ist dieses ergonomisch geformt, wie in Fig. 6 schematisch angedeutet ist. Die Flügel 66 verjüngen sich in ihrem Verlauf radial einwärts und weisen im radial äußeren Endbereich die größte Breite B₆₆ senkrecht zur Längserstreckung auf. Weiterhin bevorzugt sind die Flügel 66 in ihrem Verlauf krummlinig ähnlich einer Keule ausgebildet. Aufgrund dieser Formgebung passt sich die Form der Flügel 66 an die Hand des Werkers an und erleichtert ein manuelles Drehen des hohlzylinderförmigen Gewindeelements 60.

Zudem bevorzugt umfasst das hohlzylinderförmige Gewindeelement 60 ein maschinelles Antriebsmittel 68, sodass das hohlzylinderförmige Gewindeelement 60 mit einem Werkzeug drehbar ist. In den beispielgebenden Figuren 4, 6 und 8 ist das Antriebsmittel 68 als Schlitz für einen Schlitzschraubendreher ausgestaltet. Hier ist in gleicher Weise eine Öffnung mit Vierkant-, Sechskant-, Torxprofil oder ähnlichem denkbar. In gleicher Weise ist ein axialer Vorsprung nutzbar, der ein Außenprofil in Form eines Vierkants, Sechskants, Torx oder dergleichen aufweist.

Das erfindungsgemäße Sicherungselement 20 umfasst zudem mindestens eine konstruktive Verdrehsicherung 30; 34. Die konstruktive Verdrehsicherung 30; 34 besteht aus zusammenwirkenden geometrischen Komponenten, sodass die Verdrehsicherung nicht allein durch Haftreibung aneinander anliegender Oberflächen bereitgestellt wird.

Eine erste Verdrehsicherung 30 besteht vorzugsweise aus einem umfänglich angeordneten Eingriffsfeld oder einer Eingriffsvertiefung 31, in die ein axial verlaufender Rastarm 70 eingreift. Der axiale Rastarm 70 ist mit dem hohlzylinderförmigen Gewindeelement 60 derart verbunden, dass er seiner Drehung folgt. Zu diesem Zweck ist bevorzugt ein flächiges Zwischenelement 61 vorgesehen, dass zwischen dem Antriebsmittel 66 und den Gewinden 62, 64 angeordnet ist. Das flächige Zwischenelement 61 hat vorzugsweise eine runde Form, wobei auch andere Gestaltungen den gleichen Zweck erfüllen. Gemäß einer weiteren Alternative (nicht gezeigt) greift der Rastarm 70 in Form eines abgewinkelten Stegs direkt am Antriebsmittel 66; 68 an, ohne ein flächiges Zwischenelement 61 zu nutzen.

Sobald der Werker manuell oder maschinell das hohlzylinderförmige Gewindeelement 60 in eine Befestigungsposition für die Bauteile A, B gedreht hat, gelangt der Rastarm 70 in Eingriff mit der Eingriffsvertiefung 31 (Schritt F). Gemäß einer bevorzugten Ausführungsform vorliegender Erfindung erstreckt sich das Eingriffsfeld 31 über eine Breite in Umfangsrichtung, die über die umfängliche Breite des Rastarms 70 hinaus geht. Dadurch ist gewährleistet, dass der Rastarm 70 innerhalb des Eingriffsfelds 31 eine in Grenzen variable Position einnehmen kann, um die Bauteile A, B aneinander zu befestigen. Bevorzugt hat das Eingriffsfeld 31 eine umfängliche Breite im Bereich von 2 bis 0,5, vorzugsweise von 1,75 bis 1, mal die umfängliche Breite des Rastarms 70.

Die Grenzen des Eingriffsfelds 31 bilden bevorzugt beidseitig angeordnete radial vorstehende Stege 32, die nur mithilfe eines Lösedrehmoments durch den Rastarm 70 überwindbar sind. Vorzugsweise geht das Eingriffsfeld 31 mit einem Winkel α im Bereich von 90-120° in den Steg 32 über. Weiterhin bevorzugt geht zumindest einer der Stege 32 in einer schiefen Auflaufebene 33 in die radial äußere umlaufende Wand 24 des Sicherungselements 20 über. Dadurch ist gewährleistet, dass zumindest bei Drehung des hohlzylinderförmigen Gewindeelements 30 in Installationsrichtung I der axiale Rastarm 70 über die Auflaufebene 33 gleitet und in das Eingriffsfeld 31 eingreift oder einrastet.

Das Eingreifen des Rastarms 70 in das Eingriffsfeld 31 ist für den Werker während des Befestigungsvorgangs spürbar. Selbst bei Nutzung eines Werkzeugs zum Befestigen der beiden Bauteile A, B erkennt das Werkzeug ein Zunehmen des Drehmoments, dass durch die Blockade der Bewegung des Rastarms 70 an den Stegen 32 hervorgerufen wird. Somit signalisiert das Eingreifen des Rastarms 70 in das Eingriffsfeld 31 das Erreichen einer vorteilhaften Befestigungsposition des Schnellbefestigers 1. Zudem bildet der Rastarm 70 mit dem Eingriffsfeld 31 eine form- und/oder kraftschlüssige Verbindung, die ein Lösen der Verbindung A, B verhindert.

Nichtsdestotrotz kann vorzugsweise der Schnellbefestiger 1 und damit die Verbindung zwischen den Bauteilen A, B durch Aufbringen eines Lösedrehmoments auf das hohlzylinderförmige Gewindeelement 60 entgegen der Installationsrichtung I wieder gelöst werden. Um dieses Lösen zu unterstützen und eine Zerstörung des Rastarms 70 zu vermeiden, ist der Rastarm 70 im Querschnitt radial einwärtsragend mit Schrägen 72 ausgestattet. Die Schrägen 72 berühren sich in einem Scheitelpunkt und Schließen einen Winkel im Bereich von 170-100°, vorzugsweise 150-100° und am meisten bevorzugt einen Winkel von 120°, ein. Es ist des Weiteren bevorzugt, den Rastarm 70 ohne Schrägen 72 auszubilden.

Wenn der Rastarm 70 nicht in Eingriff mit dem Eingriffsfeld 31 steht, gleitet seine radiale Innenseite entlang der radialen Außenseite der umlaufenden Wand 24. Da der Werker gerade beim manuellen Befestigen der Bauteile A, B aneinander bevorzugt zumindest einmal umgreifen muss, wird in dieser Umgreifposition das Antriebsmittel 66 durch den Werker nicht mehr gehalten. Daher besteht die Gefahr, dass sich das hohlzylinderförmige Gewindeelement 60 entgegen der Installationsrichtung I zurück dreht und dadurch den Schnellbefestiger 1 löst. Um dies zu vermeiden und die Installation des Schnellbefestigers 1 zu erleichtern, ist vorzugsweise eine weitere Verdrehsicherung 34 in einem Übergangsbereich zwisehen einer Anfangs- oder Transportposition und der Befestigungsposition angeordnet. Vorzugsweise ist die Verdrehsicherung 34 in einem Drehwinkel im Bereich von 160°-200°, weiter bevorzugt 170°-190° von der Befestigungsposition beabstandet. Der Drehwinkel wird zwischen der Mitte des Eingriffsfeldes 31 und dem Scheitelpunkt einer Erhebung 34 (siehe unten) gemessen.

Die weitere Verdrehsicherung 34 wird durch die radial aus der umlaufenden Wand 24 vorstehende Erhebung 35 gebildet, die mit dem Rastarm 70 zusammenwirkt. Diese Erhebung 35 kann aus einer Wellenform oder einem axialen Steg bestehen. Wird das hohlzylinderförmige Gewindeelement 60 in Installationsrichtung I gedreht, gleitet der Rastarm 70 über die Erhebung 34, was durch einen kurzzeitigen Anstieg des Eindrehmoments spürbar ist. Nachdem die Erhebung 35 überwunden worden ist (Schritt E), greift der Werker am manuellen Antriebsmittel 66 um, um die Drehung fortzusetzen. Selbst wenn während des Umgreifens ein Rückdrehmoment auf das hohlzylinderförmige Gewindeelement 60 wirken sollte, wird diese Rückdrehung entgegen der Installationsrichtung I durch die weitere Verdrehsicherung 34 an der Erhebung 35 in Kombination mit dem Rastann 70 blockiert. Zu diesem Zweck ist die Erhebung 35 in radialer Richtung gerade so hoch ausgebildet, dass sie beim Eindrehen in Installationsrichtung I durch den Rastarm 70 noch überwindbar ist, bei einem unkontrollierten Rückdrehen des hohlzylinderförmigen Gewindeelements 60 aber ein die Drehung blockierendes ausreichend hohes Drehmoment erzeugt.

Weiterhin bevorzugt umfasst der Schnellbefestiger 1 eine zusätzliche Verdrehsicherung, die ein Verkontern zwischen dem Sicherungselement 20 und dem hohlzylinderförmigen Gewindeelement 60 verhindert. Ebenfalls bevorzugt stellt diese zusätzliche Verdrehsicherung eine Transportsicherung für den Schnellbefestiger 1 dar. Daraus folgt, dass während des Verbindens der Bauteile A, B der Werker bevorzugt zunächst die Transportsicherung löst (Schritt D).

Die zusätzliche Verdrehsicherung wird durch eine Vertiefung 37 an der axialen Stirnseite des Sicherungselements 20 und durch eine in axialer Richtung vorstehende Rippe 69 an der Unterseite des Zwischenelements 61 gebildet. Es ist ebenfalls bevorzugt, die Vertiefung 37 am Zwischenelement 61 und die Rippe 69 am Sicherungselement 20 vorzusehen. Vorzugsweise ist die Rippe 69 nahe der umfänglichen Position des Rastarms 70 angeordnet. Sobald das hohlzylindrische Gewindeelement 60 die Anfangs- oder Transportposition erreicht hat, greift die Rippe 69 in die Vertiefung 37 ein. Dadurch wird das hohlzylinderförmige Gewindeelement 60 lösbar am Sicherungselement 20 befestigt. Um ein Überdrehen der Anfangsposition entgegen der Installationsrichtung I zu vermeiden, weist die Rippe 69 bevorzugt eine Blockierfläche senkrecht zur Installationsrichtung I auf. Um ein Lösen der zusätzlichen Verdrehsicherung in Installationsrichtung I zu unterstützen, ist vorzugsweise eine entsprechende Auflaufschräge an der Rippe 69 vorgesehen. Es versteht sich, dass anstelle der Rippe 69 die Vertiefung 37 die entsprechenden Formgestaltungen aufweisen kann.

### Bezugszeichenliste

- A, B: Bauteil
- 1: Schnellbefestiger
- 3: komprimierbares Vorspannelement
- 10: Befestigungsbolzen
- 12: Befestigungsgewinde einer ersten Gangrichtung
- 14: Verbindungsende
- 14G: Gewinde
- 16: Führungsende
- 18: Anschlagsfläche
- 20: Sicherungselement
- 22: radial umlaufender Vorsprung
- 24: umlaufende Wand
- 26: Flansch
- 28: Gewinde einer zweiten Gangrichtung
- 30; 34: Verdrehsicherung
- 31: Eingriffsfeld
- 32: Steg
- 33: Auflaufschräge
- 35: Erhebung
- 37: Vertiefung
- 40: Feder, Schraubenfeder
- 50: Führungselement
- 52: radial umlaufender Vorsprung
- 54: umlaufende Wand
- 55: Linearführung
- 56: Anschluss
- 58: zentrale Öffnung
- 60: hohlzylinderförmiges Gewindeelement
- 61: Zwischenelement
- 62: Außengewinde
- 63: Sicherungsscheibe
- 64: Innengewinde
- 66: manuelles Antriebsmittel
- 68: maschinelles Antriebsmittel
- 69: Rippe
- 70: Rastarm
- K₄₀: Federkonstante
- S: Schlüsselloch
- B₆₆: Flügelbreite

## Patentansprüche

1. Schnellbefestiger (1), mit dem zumindest ein erstes (A) und ein zweites Bauteil (B) miteinander verbindbar sind und der die folgenden Merkmale aufweist:
a. einen Befestigungsbolzen (10) mit einem Befestigungsgewinde (12) einer ersten Gangrichtung (12), der an dem zweiten Bauteil (B) befestigbar ist,
b. ein komprimierbares Vorspannelement (3), das an dem ersten Bauteil (A) befestigbar ist und an einer radialen Innenseite ein Vorspanngewinde mit einer zweiten der ersten entgegengesetzten Gangrichtung umfasst,
c. ein hohlzylinderförmiges Gewindeelement (60) mit einem Antriebsmittel, das mit einem Außengewinde (62) an einer radialen Außenseite in das Vorspanngewinde des Vorspannelements einschraubbar ist und das an einer radialen Innenseite ein Innengewinde umfasst, in das das Befestigungsgewinde des Befestigungsbolzens einschraubbar ist, **dadurch gekennzeichnet, dass**
d. zwischen hohlzylinderförmigem Gewindeelement (60) und dem komprimierbaren Vorspannelement (3) mindestens eine konstruktive Verdrehsicherung (30, 34) vorgesehen ist.

2. Schnellbefestiger (1), mit dem zumindest ein erstes (A) und ein zweites Bauteil (B) miteinander verbindbar sind, wobei das zweite Bauteil (B) mit einem Befestigungsbolzen (10) mit einem Befestigungsgewinde (12) einer ersten Gangrichtung (12) ausgestattet ist und der die folgenden Merkmale aufweist:
a. ein komprimierbares Vorspannelement (3), das an dem ersten Bauteil (A) befestigbar ist und an einer radialen Innenseite ein Vorspanngewinde mit einer zweiten der ersten entgegengesetzten Gangrichtung umfasst,
b. ein hohlzylinderförmiges Gewindeelement (60) mit einem Antriebsmittel, das mit einem Außengewinde (62) an einer radialen Außenseite in das Vorspanngewinde des Vorspannelements (3)einschraubbar ist und das an einer radialen Innenseite ein Innengewinde umfasst, in das das Befestigungsgewinde des Befestigungsbolzens einschraubbar ist, **dadurch gekennzeichnet, dass**
c. zwischen hohlzylinderförmigem Gewindeelement (60) und dem komprimierbaren Vorspannelement (3) mindestens eine konstruktive Verdrehsicherung (30, 34) vorgesehen ist.

3. Schnellbefestiger (1) gemäß Anspruch 1 oder 2, der eine lösbare Verrastung zwischen dem Vorspannelement und dem hohlzylinderförmigen Gewindeelement (60) umfasst, mit der ein Befestigungszustand zwischen erstem (A) und zweitem Bauteil (B) sicherbar ist.

4. Schnellbefestiger (1) gemäß Anspruch 3, dessen Vorspannelement eine radial außen angeordnete Vertiefung aufweist, in der ein axial verlaufender Rastarm (70) des hohlzylinderförmigen Gewindeelements (60) verrastbar ist.

5. Schnellbefestiger (1) gemäß einem der vorhergehenden Ansprüche, dessen Vorspannelement (3) eine radial außen angeordnete Erhöhung (35) aufweist, mit der eine lösbare Reibschlussverbindung zwischen einem axial verlaufenden Rastarm (70) des hohlzylinderförmigen Gewindeelements (60) herstellbar ist.

6. Schnellbefestiger (1) gemäß Anspruch 1 oder 2, dessen Vorspannelement (3) stirnseitig angrenzend an das hohlzylindrische Gewindeelement (60) eine lösbare Rastverbindung aufweist, mit der in einer Drehrichtung eine Relativdrehung zwischen Vorspannelement (3) und Gewindeelement blockiert ist und mit der in einer entgegengesetzten Drehrichtung eine Relativdrehung zwischen Vorspannelement (3) und Gewindeelement (60) behindert ist.

7. Schnellbefestiger (1) gemäß einem der vorhergehenden Ansprüche, wobei an dem Gewindeelement (3) eine Sicherungsscheibe (63) als Verliersicherung vorgesehen ist.

8. Verbindungsverfahren für mindestens ein erstes (A) und ein zweites Bauteil (B) mit Hilfe eines Schnellbefestigers (1), insbesondere ein Schnellbefestiger (1) gemäß einem der vorhergehenden Ansprüche, das die folgenden Schritte umfasst:
a. Bereitstellen des zweiten Bauteils (B) mit einem Befestigungsbolzen (10) mit einem radial äußeren Befestigungsgewinde einer ersten Gangrichtung (12),
b. Bereitstellen des ersten Bauteils (A) mit einer Durchgangsöffnung und Befestigen eines komprimierbaren Vorspannelements (3), an dem ersten Bauteil (A), wobei das Vorspannelement (3) an einer radialen Innenseite ein Vorspanngewinde mit einer zweiten der ersten entgegengesetzten Gangrichtung umfasst, **gekennzeichnet durch** den weiteren Schritt
c. Einschrauben des Befestigungsbolzens (10) in ein hohlzylinderformiges Gewindeelement (60), wobei das hohlzylinderförmige Gewindeelement (60) über ein Antriebsmittel drehend das zweite Bauteil (B) am ersten Bauteil (A) befestigt und das hohlzylindrische Gewindeelement (60) über eine Verdrehsicherung (30, 34) am Vorspannelement (3) verrastet.

9. Verbindungsverfahren gemäß Anspruch 8, wobei ein axial verlaufender Rastarm (70) des hohlzylindrischen Gewindeelements (60) in einer radial außen angeordneten Vertiefung des Vorspannelements einrastet.

10. Verbindungsverfahren gemäß Anspruch 8 oder 9, mit dem weiteren Schritt:
Bewegen eines axial verlaufenden Rastarms (70) des hohlzylinderförmigen Gewindeelements (60) über eine radial außen angeordnete Erhebung (35) des Vorspannelements, so dass der Rastarm (70) und die Erhebung (35) eine Rückdrehsicherung für das Gewindeelement bereitstellt, die ein Rückdrehen des Gewindeelements verhindert.

11. Herstellungsverfahren für einen Schnellbefestiger (1), mit dem zumindest ein erstes (A) und ein zweites Bauteil (B) miteinander verbindbar sind, wobei das zweite Bauteil (B) mit einem Befestigungsbolzen (10) mit einem Befestigungsgewinde (12) einer ersten Gangrichtung (12) ausgestattet ist, und das die folgenden Schritte aufweist:
a. Bereitstellen eines komprimierbaren Vorspannelements (3), das an dem ersten Bauteil (A) befestigbar ist und an einer radialen Innenseite ein Vorspanngewinde mit einer zweiten der ersten entgegengesetzten Gangrichtung umfasst,
b. Herstellen eines hohlzylinderförmigen Gewindeelements (60) mit einem Antriebsmittel, das mit einem Außengewinde (62) an einer radialen Außenseite in das Vorspanngewinde des Vorspannelements einschraubbar ist und das an einer radialen Innenseite ein Innengewinde umfasst, in das das Befestigungsgewinde des Befestigungsbolzens einschraubbar ist,
c. Verbinden des komprimierbaren Vorspannelements (3) mit dem hohlzylinderförmigen Gewindeelement (60), **gekennzeichnet durch** den weiteren Schritt:
d. Vorsehen einer konstruktiven Verdrehsicherung (30, 34) zwischen dem hohlzylinderförmigen Gewindeelement (60) und dem komprimierbaren Vorspannelement (3).

12. Herstellungsverfahren gemäß Anspruch 11, mit dem weiteren Schritt:
Bereitstellen des Vorspannelements (3) mit einer radial außen angeordneten Vertiefung (31) und des hohlzylinderförmigen Gewindeelements (60) mit einem axial verlaufenden Rastarm (70), so dass diese verrastbar sind.

13. Herstellungsverfahren gemäß Anspruch 11 oder 12, mit dem weiteren Schritt:
Bereitstellen des Vorspannelements (3) mit einer radial außen angeordneten Erhebung (35), mit der eine lösbare Reibschlussverbindung zwischen einem axial verlaufenden Rastarm (70) des hohlzylinderförmigen Gewindeelements (60) herstellbar ist.

14. Herstellungsverfahren gemäß Anspruch 11, 12 oder 13, mit dem weiteren Schritt:
Bereitstellen einer lösbaren Rastverbindung am Vorspannelement (3) stirnseitig angrenzend an das hohlzylindrischen Gewindeelement (60), mit der in einer Drehrichtung eine Relativdrehung zwischen Vorspannelement (3) und Gewindeelement (60) blockiert ist und mit der in einer entgegengesetzten Drehrichtung eine Relativdrehung zwischen Vorspannelement (3) und Gewindeelement (60) behindert ist.

## Claims

1. Quick fastener (1) by means of which at least a first (A) and a second component (B) are connectable to each other and which has the following features:
a. a fastening bolt (10) with a fastening thread (12) of a first spiral direction which is fastenable at the second component (B),
b. a compressible pretension element (3) which is fastenable at the first component (A) and which comprises a pretension thread at a radial inner side having a second spiral direction opposite to the first spiral direction,
c. a hollow cylindrical thread element (60) having a drive means which is screwable with an outer thread (62) at a radial outer side into the pretension thread of the pretension element and which comprises an inner thread at a radial inner side into which the fastening thread of the fastening bolt is screwable, **characterized in that**
d. at least a constructive rotation protection (30; 34) is provided between the hollow cylindrical thread element (60) and the compressible pretension element (3).

2. Quick fastener (1) by means of which at least a first (A) and a second component (B) are connectable to each other, wherein the second component (B) is provided with a fastening bolt (10) having a fastening thread (12) of a first spiral direction and which comprises the following features:
a. a compressible pretension element (3) which is fastenable at the first component (A) and which comprises a pretension thread at a radial inner side having a second spiral direction opposite to the first spiral direction,
b. a hollow cylindrical thread element (60) having a drive means which is screwable with an outer thread (62) at a radial outer side into the pretension thread of the pretension element (3) and which comprises an inner thread at a radial inner side into which the fastening thread of the fastening bolt is screwable, **characterized in that**
c. at least a constructive rotation protection (30; 34) is provided between the hollow cylindrical thread element (60) and the compressible pretension element (3).

3. Quick fastener (1) according to claim 1 or 2, comprising a releasable lock between the pretension element and the hollow cylindrical thread element (60) by means of which a fastening condition between first (A) and second component (B) is securable.

4. Quick fastener (1) according to claim 3, the pretension element of which has a radially outside arranged indentation into which an axially extending locking arm (70) of the hollow cylindrical thread element (60) is lockable.

5. Quick fastener (1) according to one of the preceding claims, the pretension element (3) of which has an elevation (35) which is arranged radially outwardly and by means of which a releasable frictional connection to an axially extending locking arm (70) of the hollow cylindrical thread element (60) is producible.

6. Quick fastener (1) according to claim 1 or 2, the pretension element (3) of which comprises a releasable lock connection at the front side adjacently to the hollow cylindrical thread element (60) by means of which a relative rotation between pretension element (3) and a thread element in a rotation direction is blocked and by means of which a relative rotation between pretension element (3) and thread element (60) in an opposite rotation direction is prevented or hindered.

7. Quick fastener (1) according to one of the preceding claims, wherein a securing disk (63) is provided at the thread element (3) as loose protection.

8. Connection method for at least a first (A) and a second component (B) by means of a quick fastener (1), especially a quick fastener (1) according to one of the preceding claims, wherein the method comprises the following steps:
a. providing the second component (B) having a fastening bolt (10) with a radial outer fastening thread of a first spiral direction (12),
b. providing the first component (A) having a through-opening and fastening a compressible pretension element (3) at the first component (A), wherein the pretension element (3) comprises a pretension thread at a radial inner side having a second spiral direction opposite to the first spiral direction, **characterized by** the further step
c. screwing of the fastening bolt (10) into a hollow cylindrical thread element (60), wherein the hollow cylindrical thread element (60) fastens the second component (B) at the first component (A) in a rotating manner by means of a driving means and locks the hollow cylindrical thread element (60) at the pretension element (3) by means of a rotation protection (30, 34).

9. Connection method according to claim 8, wherein an axially extending locking arm (70) of the hollow cylindrical thread element (60) locks in an indentation of the pretension element which is arranged radially outside.

10. Connection method according to claim 8 or 9, comprising the further step:
moving an axially extending locking arm (70) of the hollow cylindrical thread element (60) beyond a radially outside arranged elevation (35) of the pretension element so that the locking arm (70) and the elevation (35) provide a turn-back protection for the thread element which prevents a turning back of the thread element.

11. Production method for a quick fastener (1) by means of which at least a first (A) and a second component (B) are connectable to each other, wherein the second component (B) is provided with a fastening bolt (10) having a fastening thread (12) of a first spiral direction (12), wherein the method comprises the following steps:
a. providing a compressible pretension element (3) which is fastenable to the first component (A) and comprises a pretension thread at a radial inner side having a second spiral direction which is opposite to the first spiral direction,
b. producing a hollow cylindrical thread element (60) with a drive means which is screwable with an outer thread (62) at a radial outer side into the pretension thread of the pretension element and which comprises an inner thread at a radial inner side into which the fastening thread of the fastening bolt is screwable,
c. connecting the compressible pretension element (3) with the hollow cylindrical thread element (60), **characterized by** the further step
d. providing a constructive rotation protection (30, 34) between the hollow cylindrical thread element (60) and the compressible pretension element (3).

12. Production method according to claim 11 having the further step:
providing the pretension element (3) with an indentation (31) which is arranged radially outside and the hollow cylindrical thread element (60) with an axially extending locking arm (70) so that they are lockable.

13. Production method according to claim 11 or 12, comprising the further step:
providing the pretension element (3) with an elevation (35) which is arranged radially outside and by means of which a releasable frictional connection to an axially extending locking arm (70) of the hollow cylindrical thread element (60) is producible.

14. Production method according to claim 11, 12 or 13 comprising the further step:
providing a releasable locking connection at the pretension element (3) at the front side adjacent to the hollow cylindrical thread element (60) by means of which a relative rotation between pretension element (3) and thread element (60) in a rotation direction is blocked and by means of which a relative rotation between pretension element (3) and thread element (60) in an opposite rotation direction is prevented or hindered.

## Revendications

1. Dispositif de fixation rapide (1) comprenant au moins un premier (A) et un deuxième composant (B) aptes à être reliés entre eux, et présentant les caractéristiques suivantes :
a. un boulon de fixation (10) avec un filetage de fixation (12) d'une première direction de pas (12), lequel peut être fixé sur le deuxième composant (B),
b. un élément de précontrainte compressible (3) pouvant être fixé sur le premier composant (A) et comportant un filetage de précontrainte sur un côté intérieur radial, avec une deuxième direction de pas opposée à la première,
c. un élément de filetage en forme de cylindre creux (60) avec un moyen d'entraînement apte à être vissé avec un filetage extérieur (62) sur un côté extérieur radial dans le filetage de précontrainte de l'élément de précontrainte, et comportant un filetage intérieur sur un côté intérieur radial, dans lequel le filetage de fixation du boulon de fixation peut être vissé, **caractérisé en ce que**
d. au moins une sécurité anti-rotation structurelle (30, 34) est prévue entre l'élément de filetage en forme de cylindre creux (60) et l'élément de précontrainte compressible (3).

2. Dispositif de fixation rapide (1) comprenant au moins un premier (A) et un deuxième composant (B) aptes à être reliés entre eux, dans lequel le deuxième composant (B) est équipé d'un boulon de fixation (10) avec un filetage de fixation (12) d'une première direction de pas (12), et présentant les caractéristiques suivantes :
a. un élément de précontrainte compressible (3) pouvant être fixé sur le premier composant (A) et comportant un filetage de précontrainte sur un côté intérieur radial, avec une deuxième direction de pas opposée à la première,
b. un élément de filetage en forme de cylindre creux (60) avec un moyen d'entraînement apte à être vissé avec un filetage extérieur (62) sur un côté extérieur radial dans le filetage de précontrainte de l'élément de précontrainte (3), et comportant un filetage intérieur sur un côté intérieur radial, dans lequel le filetage de fixation du boulon de fixation peut être vissé, **caractérisé en ce que**
c. au moins une sécurité anti-rotation structurelle (30, 34) est prévue entre l'élément de filetage en forme de cylindre creux (60) et l'élément de précontrainte compressible (3).

3. Dispositif de fixation rapide (1) selon la revendication 1 ou 2, comportant un encliquetage libérable entre l'élément de précontrainte et l'élément de filetage en forme de cylindre creux (60), permettant de maintenir un état de fixation entre le premier (A) et le deuxième composant (B).

4. Dispositif de fixation rapide (1) selon la revendication 3, dont l'élément de précontrainte présente un renfoncement disposé radialement à l'extérieur, dans lequel un bras d'encliquetage s'étendant axialement (70) de l'élément de filetage en forme de cylindre creux (60) peut être encliqueté.

5. Dispositif de fixation rapide (1) selon l'une des revendications précédentes, dont l'élément de précontrainte (3) présente une surélévation (35) disposée radialement à l'extérieur, permettant d'établir un assemblage par frottement libérable entre un bras d'encliquetage s'étendant axialement (70) de l'élément de filetage en forme de cylindre creux (60).

6. Dispositif de fixation rapide (1) selon la revendication 1 ou 2, dont l'élément de précontrainte (3) présente un assemblage par encliquetage libérable sur le côté frontal à côté de l'élément de filetage en forme de cylindre creux (60), permettant de bloquer une rotation relative dans une direction de rotation entre l'élément de précontrainte (3) et l'élément fileté, et empêchant une rotation relative dans une direction de rotation opposée entre l'élément de précontrainte (3) et l'élément fileté (60).

7. Dispositif de fixation rapide (1) selon l'une des revendications précédentes, dans lequel une rondelle de sécurité (63) est prévue en tant que sécurité antiperte sur l'élément fileté (3).

8. Procédé d'assemblage pour au moins un premier (A) et un deuxième composant (B) à l'aide d'un dispositif de fixation rapide (1), en particulier d'un dispositif de fixation rapide (1) selon l'une des revendications précédentes, comportant les étapes suivantes :
a. mise à disposition du deuxième composant (B) avec un boulon de fixation (10) avec un filetage de fixation radialement extérieur d'une première direction de pas (12),
b. mise à disposition du premier composant (A) avec une ouverture de passage et fixation d'un élément de précontrainte compressible (3) sur le premier composant (A), l'élément de précontrainte (3) comportant un filetage de précontrainte avec une deuxième direction de pas opposée à la première, sur un côté intérieur radial, **caractérisé par** l'étape supplémentaire suivante
c. vissage du boulon de fixation (10) dans un élément de filetage en forme de cylindre creux (60), l'élément de filetage en forme de cylindre creux (60) fixant le deuxième composant (B) au premier composant (A) de façon rotative par le biais d'un moyen d'entraînement, et l'élément de filetage en forme de cylindre creux (60) s'encliquetant sur l'élément de précontrainte (3) par le biais d'une sécurité anti-rotation (30, 34).

9. Procédé d'assemblage selon la revendication 8, dans lequel un bras d'encliquetage s'étendant axialement (70) de l'élément de filetage en forme de cylindre creux (60) s'encliquète dans un renfoncement de l'élément de précontrainte disposé radialement à l'extérieur.

10. Procédé d'assemblage selon la revendication 8 ou 9, comprenant l'étape supplémentaire suivante :
- déplacement d'un bras d'encliquetage s'étendant axialement (70) de l'élément de filetage en forme de cylindre creux (60) par-dessus une surélévation (35) radialement extérieure de l'élément de précontrainte, de telle façon que le bras d'encliquetage (70) et la surélévation (35) fournissent une sécurité anti-rotation rétrograde pour l'élément fileté, laquelle empêche une rotation rétrograde de l'élément fileté.

11. Procédé de fabrication pour un dispositif de fixation rapide (1), permettant de relier entre eux au moins un premier composant (A) et un deuxième composant (B), dans lequel le deuxième composant (B) est équipé d'un boulon de fixation (10) comprenant un filetage de fixation (12) d'une première direction de pas (12), et présentant les étapes suivantes :
a. mise à disposition d'un élément de précontrainte compressible (3) apte à être fixé sur le premier composant (A) et comportant un filetage de précontrainte avec une deuxième direction de pas opposée à la première sur un côté intérieur radial,
b. fabrication d'un élément de filetage en forme de cylindre creux (60) comprenant un moyen d'entraînement, lequel peut être vissé dans le filetage de précontrainte de l'élément de précontrainte avec un filetage extérieur (62) sur un côté extérieur radial, et comportant un filetage intérieur sur un côté intérieur radial, dans lequel le filetage de fixation du boulon de fixation peut être vissé,
c. assemblage de l'élément de précontrainte compressible (3) avec l'élément de filetage en forme de cylindre creux (60), **caractérisé par** l'étape supplémentaire suivante :
d. réalisation d'une sécurité anti-rotation structurelle (30, 34) entre l'élément de filetage en forme de cylindre creux (60) et l'élément de précontrainte compressible (3).

12. Procédé de fabrication selon la revendication 11, comprenant l'étape supplémentaire suivante :
- mise à disposition de l'élément de précontrainte (3) avec un renfoncement (31) disposé radialement à l'extérieur et de l'élément de filetage en forme de cylindre creux (60) avec un bras d'encliquetage s'étendant axialement (70), de manière à ce que ceux-ci puissent s'encliqueter.

13. Procédé de fabrication selon la revendication 11 ou 12, comprenant l'étape supplémentaire suivante :
- mise à disposition de l'élément de précontrainte (3) avec une surélévation (35) disposée radialement à l'extérieur, permettant d'établir un assemblage par frottement libérable entre un bras d'encliquetage s'étendant axialement (70) de l'élément de filetage en forme de cylindre creux (60).

14. Procédé de fabrication selon la revendication 11, 12 ou 13, comprenant l'étape supplémentaire suivante :
- mise à disposition d'un assemblage par encliquetage libérable sur l'élément de précontrainte (3) sur le côté frontal à côté de l'élément de filetage en forme de cylindre creux (60), permettant de bloquer une rotation relative dans une direction de rotation entre l'élément de précontrainte (3) et l'élément fileté (60), et empêchant une rotation relative dans une direction de rotation opposée entre l'élément de précontrainte (3) et l'élément fileté (60).
